# EUROPÄISCHE PATENTSCHRIFT

(11) **EP 1 492 641 B1**
(45) Veröffentlichungstag und Bekanntmachung des Hinweises auf die Patenterteilung: **02.08.2006**
(21) Anmeldenummer: 03707892.0
(22) Anmeldetag: 18.03.2003
(51) Int. Cl.: B23K 9/09, B23K 9/10

(54) **SCHWEISS- UND HEFTSCHWEISSVERFAHREN MIT EINER NICHTABSCHMELZENDEN ELEKTRODE**
WELDING AND TACK WELDING METHOD INVOLVING THE USE OF A NON-FUSING ELECTRODE
PROCEDE DE SOUDAGE CLASSIQUE OU PAR POINTS D'EPINGLAGE MIS EN OEUVRE A L'AIDE D'UNE ELECTRODE NON FUSIBLE

(30) Priorität: 10.04.2002 AT 5532002
(43) Veröffentlichungstag der Anmeldung: 05.01.2005
(73) Patentinhaber: Fronius International GmbH, 4643 Pettenbach (AT)
(72) Erfinder: ARTELSMAIR, Josef, A-4552 Wartberg/Krems (AT); MÖRTENDORFER, Bernhard, A-4551 Ried im Traunkreis (AT)
(74) Vertreter: Sonn & Partner Patentanwälte
(86) Internationale Anmeldenummer: PCT/AT2003/000076
(87) Internationale Veröffentlichungsnummer: WO 2003/084705

(56) Entgegenhaltungen:
- WO-A-95/34400
- GB-A- 2 038 687
- PATENT ABSTRACTS OF JAPAN vol. 005, no. 053 (M-063), 14. April 1981 (1981-04-14) & JP 56 009060 A (TOSHIBA CORP), 29. Januar 1981 (1981-01-29)
- PATENT ABSTRACTS OF JAPAN vol. 2000, no. 24, 11. Mai 2001 (2001-05-11) & JP 2001 198677 A (ISHIKAWAJIMA HARIMA HEAVY IND CO LTD), 24. Juli 2001 (2001-07-24)
- PATENT ABSTRACTS OF JAPAN vol. 018, no. 585 (M-1700), 9. November 1994 (1994-11-09) & JP 06 218546 A (TOYOTA MOTOR CORP), 9. August 1994 (1994-08-09)
- PATENT ABSTRACTS OF JAPAN vol. 004, no. 096 (M-020), 11. Juli 1980 (1980-07-11) & JP 55 054273 A (SHOWA ALUM CORP), 21. April 1980 (1980-04-21)
- AENDENROOMER A J R ET AL: "WELD POOL OSCILLATION AS A TOOL FOR PENETRATION SENSING DURING PULSED GTA WELDING" , WELDING JOURNAL, AMERICAN WELDING SOCIETY. MIAMI, US, VOL. 77, NR. 5, PAGE(S) 181-S-187-S XP000831416 ISSN: 0043-2296 das ganze Dokument

## Beschreibung

Die Erfindung betrifft ein Schweißverfahren mit einer nichtabschmelzenden Elektrode, bei dem nach dem Zünden eines Lichtbogens zwischen der Elektrode und den zu verbindenden Werkstücken die Elektrode von einer Stromquelle mit Energie versorgt wird.

Weiters betrifft die Erfindung ein Heftschweißverfahren mit einer nichtabschmelzenden Elektrode und ohne Einbringung eines Zusatzmaterials, bei dem nach dem Zünden eines Lichtbogens zwischen der Elektrode und den zu verbindenden Werkstücken die Elektrode von einer Stromquelle mit Energie versorgt wird.

Es sind bereits verschiedenste Schweißverfahren bekannt, bei denen nach dem Zünden des Lichtbogens zwischen der Elektrode und den zu verbindenen Werkstücken die Elektrode von einer Stromquelle mit Energie versorgt und somit eine Verschmelzung der Werkstücke bewirkt wird. Für die Zündung des Lichtbogens können unterschiedliche Zünd-Prozesse, insbesondere eine KontaktZündung oder eine HF-Zündung, durchgeführt werden.

Der Erfindung liegt die Aufgabe zugrunde, ein Schweißverfahren mit einer nichtabschmelzenden Elektrode und ein Heftschweißverfahren mit einer nichtabschmelzenden Elektrode und ohne Einbringung eines zusatzmaterials zu schaffen, bei dem die Schweißnahtqualität in der Startphase des Schweißprozesses verbessert wird.

Diese Aufgabe der Erfindung wird dadurch gelöst, dass vor dem eigentlichen Schweißprozess, also nach dem Zünden des Lichtbogens, ein Startprogramm ohne Einbringung eines Zusatzwerkstoffes durchgeführt wird, bei dem über eine voreinstellbare Zeitdauer die Elektrode mit pulsförmiger Energie in Form von Strom oder Spannungsimpulsen versorgt wird, wodurch das flüssige Schmelzbad in Schwingung bzw. in Vibration versetzt wird, und dass nach Ablauf des Startprogramms der eigentliche Schweißprozess durchgeführt wird.

Beim eigentlichen Schweißprozess wird die Elektrode vorzugsweise mit einer konstanten Energie versorgt.

Weiters wird die Aufgabe der Erfindung auch durch ein oben erwähntes Heftschweißverfahren gelöst, wobei vor dem eigentlichen Schweißprozess ein Startprogramm durchgeführt wird, bei dem über eine voreinstellbare Zeitdauer die Elektrode mit pulsförmiger Energie in Form von Strom- oder Spannungsimpulsen versorgt wird, wodurch das flüssige Schmelzbad in Schwingung bzw. in Vibration versetzt wird, und dass nach Ablauf des Startprogramms der eigentliche Schweißprozess durchgeführt wird, bei dem die Elektrode mit einer konstanten Energie versorgt wird.

Durch die Ausführung des speziellen Startprogramms, insbesondere eines sogenannten Tacking-Prozesses, wird erreicht, dass das erzeugte Schmelzbad in Schwingung gebracht wird und somit durch die Schwingung des Schmelzbades ein leichteres Zusammenfließen des Schmelzbades der beiden Werkstücke erreicht wird. Dies ist insofern sehr wesentlich, da kein Zusatzwerkstoff in Form eines Schweißdrahtes in das Schmelzbad eingebracht wird, sondern die Schweißnaht nur durch das aufgeschmolzene Material gebildet wird und somit eine Auffüllung der Schweißnaht durch den Zusatzwerkstoff nicht möglich ist. Somit wird bei derartigen Schweißverfahren ohne Einbringung eines Zusatzwerkstoffes verhindert, dass am Beginn des Schweißprozesses Schweißnahtlöcher entstehen und es kann von Beginn des Schweißprozesses an eine gleichbleibende Schweißnaht ohne Schweißnahtlöcher gebildet werden. Wird nämlich bei üblichen zum Stand der Technik zählenden Schweißverfahren ein Lichtbogen gezündet, so wird aufgrund der Energieeinbringung das aufgeschmolzene Material der Werkstücke auseinander gedrückt und es erstarrt. Dabei kann ein Schweißloch entstehen oder am Beginn des Schweißprozesses die Schweißnaht im Mittelbereich eine geringere Schweißnahtdicke aufweisen. Dies wird aufgrund des Startprogramms, bei dem das Schmelzbad durch pulsförmige Energieeinbringung in Schwingung versetzt wird, vermieden, da das Schmelzbad keiner ständigen konstanten Energieeinbringung ausgesetzt ist.

Durch das Startprogramm können weiters sehr kurze Schweißnähte hergestellt werden, da von Beginn des Schweißprozesses an, also sofort nach der Zündung des Lichtbogens, eine vollständige Ausbildung der Schweißnaht erreicht wird und somit die Schweißnahtlänge sehr kurz gehalten werden kann. Dies ist besonders von Vorteil, wenn als Material der zu verschweißenden Werkstücke Aluminium eingesetzt wird, da durch kurze Schweißnähte der Verzug des Materials durch geringere Erwärmung verhindert wird.

Durch die erfindungsgemäße Lösung wird auch erreicht, dass die Spaltüberbrückung der zu verschweißenden Werkstücke erheblich vergrößert wird, da aufgrund der sich bildenden schwingenden Schmelzbäder der Werkstücke ein besseres Zusammenfließen gewährleistet ist.

Die Energieeinbringung während des Startprogramms kann derart geregelt werden, dass der Mittelwert der pulsförmigen Energie der Amplitude des eingestellten Schweißstromes für den nachfolgenden eigentlichen Schweißprozess mit konstanter Energie entspricht. Somit kann das Startprogramm einfach an den nachfolgenden eigentlichen Schweißprozess angepasst werden.

Die Parameter des Startprogramms, insbesondere die Pulsparameter, wie Pulshöhe, Pulsbreite, Pulsfrequenz, Pulspause und eventuell Kurvenform, können an der Stromquelle vorteilhafterweise frei eingestellt werden.

Es ist auch möglich, dass die Parameter des Startprogramms in Abhängigkeit der Parameter des eigentlichen Schweißprozesses automatisch von einer Steuer- und/oder Auswertevorrichtung im Schweißgerät bzw. in der Stromquelle festgelegt bzw. verändert werden.

Dabei ist es beispielsweise möglich, dass die Parameter des Startprogramms in Abhängigkeit der Amplitude des Schweißstromes für den eigentlichen Schweißprozess automatisch festgelegt bzw. verändert werden.

Es ist auch möglich, dass die Parameter des Startprogramms in Abhängigkeit der Materialstärke bzw. des Materials der zu verschweißenden Werkstücke oder weiterer Parameter des eigentlichen Schweißprozesses automatisch festgelegt bzw. verändert werden.

Schließlich können auch mehrere Startprogramme mit unterschiedlichen Parametern oder Kurvenformen definiert und hinterlegt sein und zur Auswahl der Parameter für das Startprogramm diese definierten und hinterlegten Startprogramme von der Steuer- und/oder Auswertevorrichtung herangezogen und/oder verändert werden.

Das Startprogramm, bei dem über eine voreinstellbare Zeitdauer die Elektrode mit pulsförmiger Energie versorgt wird, kann auch eine voreinstellbare Zeitdauer nach dem Zünden des Lichtbogens durchgeführt werden.

Während dieser voreinstellbaren Zeitdauer nach dem Zünden des Lichtbogens wird die Elektrode vorzugsweise mit konstanter Energie versorgt.

Wenn die Elektrode während der voreinstellbaren Zeitdauer nach dem Zünden des Lichtbogens mit unterschiedlicher konstanter Energie als während des eigentlichen Schweißprozesses versorgt wird, kann erreicht werden, dass während der Zeitdauer zwischen dem Zünden des Lichtbogens und dem Beginn des Startprogramms der Lichtbogen stabilisiert wird, bevor das Startprogramm und danach der eigentliche Schweißprozess gestartet wird.

Die Erfindung wird anschließend durch Ausführungsbeispiele näher beschrieben.

Es zeigen:
Fig. 1 eine schematische Darstellung eines Schweißgerätes;
Fig. 2 den zeitlichen Verlauf des Schweißstromes während einer Ausführungsform eines Schweißprozesses in vereinfachter schematischer Darstellung;
Fig. 3 ein weiteres Zeitdiagramm des Schweißstromes während eines anderen Schweißprozesses in vereinfachter schematischer Darstellung.

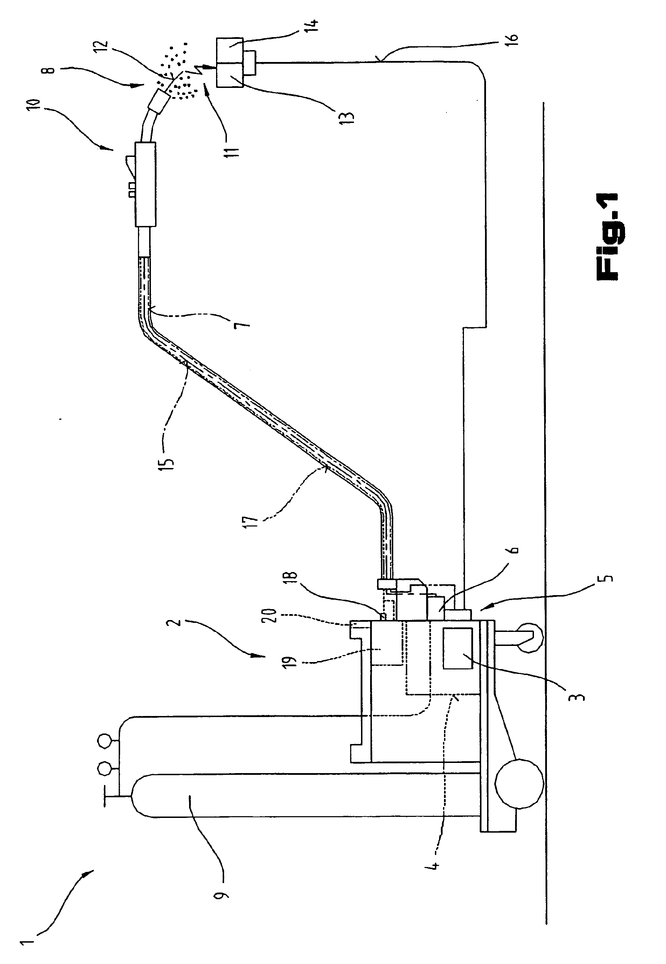

In Fig. 1 ist eine Schweißanlage bzw. ein Schweißgerät 1 für verschiedenste Schweißverfahren, wie z.B. WIG/TIG-Schweißen oder Elektroden-Schweißverfahren, dargestellt. Selbstverständlich ist es möglich, dass die erfindungsgemäße Lösung bei einer Stromquelle bzw. einer Schweißstromquelle eingesetzt werden kann.

Das Schweißgerät 1 umfasst eine Schweißstromquelle 2 mit einem Leistungsteil 3, einer Steuer- und/oder Auswertevorrichtung 4 und einem dem Leistungsteil 3 bzw. der Steuer- und/oder Auswertevorrichtung 4 zugeordneten Umschaltglied 5. Das Umschaltglied 5 bzw. die Steuer- und/oder Auswertevorrichtung 4 ist mit einem Steuerventil 6 verbunden, welches in einer Versorgungsleitung 7 für ein Gas 8, insbesondere ein Schutzgas, wie beispielsweise Argon oder Helium und dgl., zwischen einem Gasspeicher 9 und einem Schweißbrenner 10 angeordnet ist.

Die Energie, insbesondere der Strom, zum Aufbauen eines Lichtbogens 11 zwischen einer Elektrode 12 und den zu verbindenden Werkstücken 13, 14 wird über eine Schweißleitung 15 vom Leistungsteil 3 der Schweißstromquelle 2 dem Schweißbrenner 10 bzw. der Elektrode 12 zugeführt, wobei die zu verschweißenden Werkstücke 13, 14 über eine weitere Schweißleitung 16 ebenfalls mit dem Schweißgerät 1, insbesondere mit der Schweißstromquelle 2, verbunden ist und somit über den Lichtbogen 11 ein Stromkreis aufgebaut werden kann.

Zum Kühlen des Schweißbrenners 10 kann über einen Kühlkreislauf 17 der Schweißbrenner 10 unter Zwischenschaltung eines Strömungswächters 18 mit einem Flüssigkeitsbehälter, insbesondere einem Wasserbehälter 19, verbunden werden, wodurch bei der Inbetriebnahme des Schweißbrenners 10 der Kühlkreislauf 17, insbesondere eine für die im Wasserbehälter 19 angeordnete Flüssigkeit verwendete Flüssigkeitspumpe, gestartet wird und somit eine Kühlung des Schweißbrenners 10 bewirkt werden kann.

Das Schweißgerät 1 weist weiters eine Ein- und/oder Ausgabevorrichtung 20 auf, über die die unterschiedlichsten Schweißparameter bzw. Betriebsarten des Schweißgerätes 1 eingestellt werden können. Dabei werden die über die Ein- und/oder Ausgabevorrichtung 20 eingestellten Schweißparameter an die Steuer- und/oder Auswertevorrichtung 4 weitergeleitet, und von dieser werden anschließend die einzelnen Komponenten des Schweißgerätes 1 angesteuert.

Selbstverständlich ist es möglich, dass sämtliche Leitungen vom Schweißgerät 1 zum Schweißbrenner 10 in einem gemeinsamen Schlauchpaket (nicht dargestellt) angeordnet werden und somit das Schlauchpaket über einen Zentralanschluss mit dem Schweißbrenner 10 und dem Schweißgerät 1 verbunden werden kann.

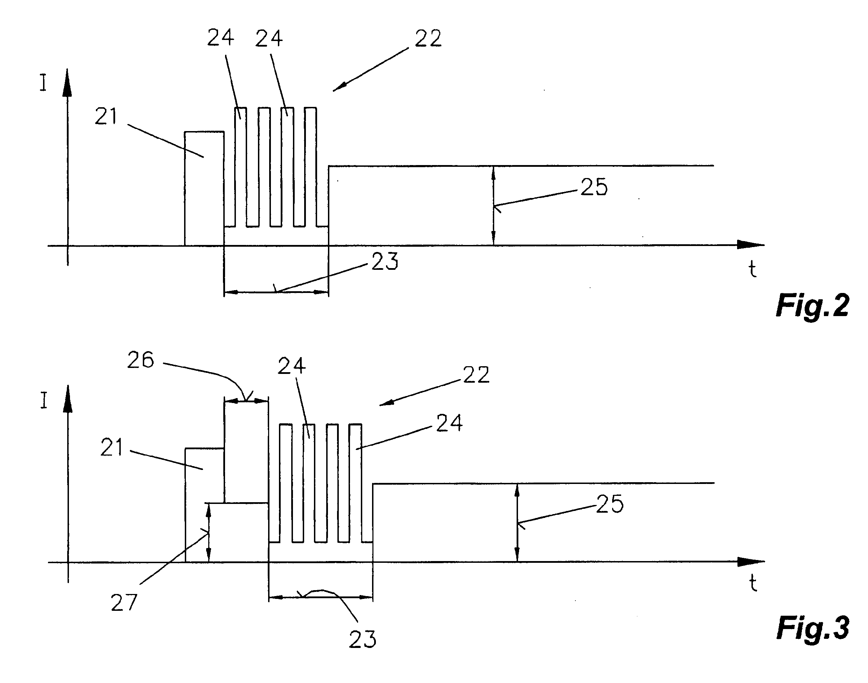

In den Fig. 2 und 3 sind zeitverläufe des Schweißstromes für ein Schweißverfahren schematisch dargestellt, wobei auf der Ordinate der Strom I und auf der Abszisse die Zeit t aufgetragen ist. Grundsätzlich ist zu erwähnen, dass die erfindungsgemäße Lösung bei jedem aus dem Stand der Technik bekannten Schweißverfahren, insbesondere auch bei Wechselstrom-Schweißverfahren, eingesetzt werden kann, wobei jedoch bei dem dargestellten Ausführungsbeispiel ein Gleichstrom-Schweißverfahren beschreiben wird.

Bei dem beschriebenen Ausführungsbeispiel wird ein Schweißprozess verwendet, bei dem kein Zusatzmaterial, insbesondere kein Schweißdraht, in den Schweißprozess eingebracht wird. Es wird die Schweißnaht (nicht dargestellt) lediglich durch das aufgeschmolzene Material der Werkstücke 13, 14 gebildet. Bei derartigen Schweißprozessen ohne zusätzliches Einbringen eines abschmelzenden Schweißdrahtes wird eine nichtabschmelzende Elektrode 12 verwendet, von der aus der Lichtbogen 11 zu den Werkstücken 13, 14 aufgebaut wird. Dadurch entstehen gerade in der Startphase eines Schweißprozesses, also nach dem Zündprozess für den Lichtbogen 11, oft Probleme bei der Ausbildung der Schweißnaht, da durch die Energieeinbringung in das Schmelzbad dieses auseinander gedrückt wird und es somit zu sogenannten Schweißlöchern oder sehr dünnen Schweißnähten kommen kann. Dies wird durch das nachfolgend beschriebene neue Verfahren vermieden.

Derartige Schweißprozesse werden beispielsweise für das Heftschweißen eingesetzt. Das Heftschweißverfahren wird mit einer nichtabschmelzenden Elektrode 12 und ohne Einbringung eines Zusatzmaterials durchgeführt, bei dem zwei Werkstücke 13, 14, insbesondere Bleche, bevorzugt stirnflächig oder überlappend zusammen geschweißt werden und hierbei lediglich eine Aufschmelzung der Werkstücke 13, 14 über den Lichtbogen 11 erfolgt. Dabei wird nach dem Zünden des Lichtbogens 11 von der Schweißstromquelle 1 die Elektrode 12 während des Schweißprozesses mit konstanter Energie, insbesondere mit Gleichstrom bzw. Gleichspannung, versorgt, die vor dem Schweißprozess über die Ein- und/oder Ausgabevorrichtung 20 eingestellt wurde. Das Zünden des Lichtbogens 11 (schematisch durch einen Zündimpuls 21 dargestellt) kann auf die unterschiedlichsten bekannten Arten, also beispielsweise durch eine Kontaktzündung oder einer HF-Zündung, erfolgen, so dass darauf nicht mehr näher eingegangen wird. Lediglich wird darauf hingewiesen, dass entsprechenden den Diagrammen in diesem Ausführungsbeispiel eine HF-Zündung durchgeführt wurde, wobei entsprechend der Stromkurve die Zündung des Lichtbogens 11 durch einen Zündimpuls 21 ersichtlich ist.

Am Beginn des Schweißprozesses, also nach dem Zünden des Lichtbogens 11, wird bei der erfindungsgemäßen Lösung vor dem eigentlichen Schweißprozess, insbesondere einem Gleichstrom-Schweißprozess, ein Startprogramm 22, insbesondere ein Tackingprozess, durchgeführt, bei dem über eine voreinstellbare Zeitdauer 23 die Elektrode 12 mit pulsförmiger Energie versorgt wird. Während des Startprogramms 22 wird die Elektrode 12 mit Stromimpulsen 24 und/oder Spannungsimpulsen versorgt. Nach Ablauf des Startprogramms 22, also nach Beendigung der Zeitdauer 23, wird die Elektrode 12 mit einer konstanten Energie, insbesondere mit einer eingestellten Stromhöhe 25, entsprechend dem gewünschten eigentlichen Schweißprozess, versorgt.

Durch die pulsierende Energiezuführung während des Startprogramms 22 wird erreicht, dass das flüssige Schmelzbad in Schwingung bzw. in Vibration versetzt wird und somit in der Startphase des Schweißprozesses ein Auseinanderfließen des Schmelzbades verhindert wird. Durch das schwingende bzw. pulsierende Schmelzbad der Werkstücke 13, 14 wird immer wieder ein Zusammenfließen des Schmelzbades erreicht. Damit wird von Beginn des Schweißprozesses an gewährleistet, dass keinerlei Schweißlöcher entstehen können und die Schweißnaht eine entsprechende Schweißnahtdicke aufweist. Somit können auch sehr kurze Schweißnähte, wie dies beim Heftschweißen erwünscht ist, hergestellt werden.

Gemäß Fig. 3 ist es auch möglich, dass nach dem Zünden des Lichtbogens 12 über eine bestimmte voreinstellbare Zeitdauer 26 die Elektrode 12 mit konstanter Energie, insbesondere einer konstanten Stromhöhe 27, versorgt wird, worauf nach Ablauf der Zeitdauer 26 das Startprogramm 22 durchführt wird. Anschließend wird wiederum eine Versorgung mit konstanter Energie, also der eigentliche Schweißprozess mit einer gewählten Stromhöhe 25, durchgeführt. Dabei ist es möglich, dass die erstmalige Versorgung des Lichtbogens 11 mit konstanter Energie, also nach dem Zünden des Lichtbogens 11, die Stromhöhe 27 unterschiedlich zu der Versorgung mit konstanter Energie, insbesondere der Stromhöhe 25, für den eigentlichen Schweißprozess, also nach dem Startprogramm 22, ist. Eine derartige Anwendung hat den Vorteil, dass durch das erstmalige Versorgen der Elektrode 12 mit konstanter Energie, also in der Zeitdauer 26, der Lichtbogen 11 stabilisiert wird, bevor das Startprogramm 22 und danach der eigentliche Schweißprozess gestartet wird.

Die Energieeinbringung während des Startprogramms 22 wird bevorzugt derart geregelt, dass der Mittelwert der pulsförmigen Energie der Stromhöhe 25 für den nachfolgenden Schweißprozess mit konstanter Energie entspricht. Somit kann das Startprogramm 22 an den eingestellten eigentlichen Schweißprozess angepasst werden.

An der Schweißstromquelle 2 sind die Parameter des Startprogramms 22, insbesondere die Pulsparameter, wie eine Pulshöhe, eine Pulsbreite, eine Pulsfrequenz, eine Pulspause und eventuell eine Kurvenform, insbesondere über die Ein- und/oder Ausgabevorrichtung 20, frei einstellbar. Hierzu ist es beispielsweise möglich, dass an der Ein- und/oder Ausgabevorrichtung 20 ein Bedienelement (nicht dargestellt) angeordnet ist, über das das Startprogramm 22 aktiviert bzw. aufgerufen werden kann und anschließend, wenn erwünscht, entsprechend verändert werden kann, so dass dieses nach dem Zünden des Lichtbogens 11 mit den gewählten Parametern selbstständig ablaufen kann.

Beispiele für Parameter des Startprogramms 22 sind:

| | |
|---|---|
| Pulsstromamplitude: | 3A - 220A |
| Grundstromamplitude: | 3A - 220A |
| Pulsfrequenz: | 40Hz - 200Hz |
| Tastverhältnis: | 4% - 50% |
| Zeitdauer: | 0 sek - 10 sek |

Selbstverständlich ist es möglich, dass die Parameter des Startprogramms 22 von der Steuer- und/oder Auswertevorrichtung 4 eigenständig bzw. automatisch festgelegt werden. Dabei kann von der Steuer- und/oder Auswertevorrichtung 4 aufgrund von hinterlegten Tabellen, Algorithmen oder dergleichen ein entsprechendes Startprogramm 22 erstellt bzw. berechnet werden, das bevorzugt in Abhängigkeit der eingestellten Parameter für den eigentlichen Schweißprozess festgelegt wird. Dabei ist es beispielsweise möglich, dass die Parameter des Startprogramms 22 von der Steuer- und/oder Auswertevorrichtung 4 im Schweißgerät 1 in Abhängigkeit der Stromhöhe 25 für den eigentlichen Schweißprozess automatisch festgelegt bzw. verändert werden. Dies kann auf die unterschiedlichsten Arten durchgeführt werden, beispielsweise durch Reduktion oder Erhöhung der Stromhöhe 25 für den Schweißprozess um einen Betrag oder eine prozentuelle Veränderung oder nach einem festgelegten Algorithmus. Es ist auch möglich, dass das Startprogramm 22 durch Eingabe einer Materialstärke bzw. eines Materials der zu verschweißenden Werkstücke 13, 14 von der Steuer- und/ oder Auswertevorrichtung 4 festgelegt wird.

Weiters ist es auch möglich, dass in der Stromquelle bzw. im Schweißgerät 1 unterschiedlich definierte Startprogramme 22, insbesondere unterschiedliche Startprogramme 22 mit unterschiedlichen Parametern oder Kurvenformen, hinterlegt sind, die von der Steuer- und/oder Auswertevorrichtung 4 herangezogen und/oder verändert bzw. von einem Benutzer ausgewählt werden können.

Abschließend sei darauf hingewiesen, dass in den zuvor beschriebenen Ausführungsbeispielen einzelne Zustände bzw. Darstellungen unproportional dargestellt wurden, um das Verständnis der erfindungsgemäßen Lösung zu verbessern.

## Patentansprüche

1. Schweißverfahren mit einer nichtabschmelzenden Elektrode, bei dem nach dem zünden eines Lichtbogens zwischen der Elektrode und den zu verbindenden Werkstücken die Elektrode von einer Stromquelle mit Energie versorgt wird, **dadurch gekennzeichnet, dass** vor dem eigentlichen Schweißprozess ein Startprogramm ohne Einbringung eines Zusatzwerkstoffes durchgeführt wird, bei dem über eine voreinstellbare Zeitdauer die Elektrode mit pulsförmiger Energie in Form von Strom- oder Spannungsimpulsen versorgt wird, wodurch das flüssige Schmelzbad in Schwingung bzw. in Vibration versetzt wird, und dass nach Ablauf des Startprogramms der eigentliche Schweißprozess durchgeführt wird.

2. Heftschweißverfahren mit einer nichtabschmelzenden Elektrode und ohne Einbringung eines Zusatzmaterials, bei dem nach dem Zünden eines Lichtbogens zwischen der Elektrode und den zu verbindenden Werkstücken die Elektrode von einer Stromquelle mit Energie versorgt wird, **dadurch gekennzeichnet, dass** vor dem eigentlichen Schweißprozess ein Startprogramm durchgeführt wird, bei dem über eine voreinstellbare Zeitdauer die Elektrode mit pulsförmiger Energie in Form von Strom- oder Spannungsimpulsen versorgt wird, wodurch das flüssige Schmelzbad in Schwingung bzw. in Vibration versetzt wird, und dass nach Ablauf des Startprogramms der eigentliche Schweißprozess durchgeführt wird, bei dem die Elektrode mit einer konstanten Energie versorgt wird.

3. Verfahren nach Anspruch 1, **dadurch gekennzeichnet, dass** beim eigentlichen Schweißprozess die Elektrode mit einer konstanten Energie versorgt wird.

4. Verfahren nach Anspruch 2 oder 3, **dadurch gekennzeichnet, dass** die Energieeinbringung während des Startprogramms derart geregelt wird, dass der Mittelwert der pulsförmigen Energie der Amplitude des eingestellten Schweißstromes für den nachfolgenden eigentlichen Schweißprozess mit konstanter Energie entspricht.

5. Verfahren nach einem der Ansprüche 1 bis 4, **dadurch gekennzeichnet, dass** an der Stromquelle die Parameter des Startprogramms, insbesondere die Pulsparameter, wie Pulshöhe, Pulsbreite, Pulsfrequenz, Pulspause und eventuell Kurvenform, frei einstellbar sind.

6. Verfahren nach einem der Ansprüche 1 bis 5, **dadurch gekennzeichnet, dass** die Parameter des Startprogramms in Abhängigkeit der Parameter des eigentlichen Schweißprozess automatisch von einer Steuer- und/oder Auswertevorrichtung im Schweißgerät bzw. in der Stromquelle festgelegt bzw. verändert werden.

7. Verfahren nach Anspruch 6, **dadurch gekennzeichnet, dass** die Parameter des Startprogramms in Abhängigkeit der Amplitude des Schweißstromes für den eigentlichen Schweißprozess automatisch festgelegt bzw. verändert werden.

8. Verfahren nach Anspruch 6 oder 7, **dadurch gekennzeichnet, dass** die Parameter des Startprogramms in Abhängigkeit der Materialstärke bzw. des Materials der zu verschweißenden Werkstücke oder weiterer Parameter des eigentlichen Schweißprozesses automatisch festgelegt bzw. verändert werden.

9. Verfahren nach einem der Ansprüche 6 bis 8, **dadurch gekennzeichnet, dass** mehrere Startprogramme mit unterschiedlichen Parametern oder Kurvenformen definiert und hinterlegt sind und dass zur Auswahl der Parameter für das Startprogramm diese definierten und hinterlegten Startprogramme von der Steuer- und/oder Auswertevorrichtung herangezogen und/oder verändert werden.

10. Verfahren nach einem der Ansprüche 1 bis 9, **dadurch gekennzeichnet, dass** das Startprogramm eine voreinstellbare Zeitdauer nach dem Zünden des Lichtbogens durchgeführt wird.

11. Verfahren nach Anspruch 10, **dadurch gekennzeichnet, dass** während der voreinstellbaren Zeitdauer nach dem Zünden des Lichtbogens die Elektrode mit konstanter Energie versorgt wird.

12. Verfahren nach Anspruch 11, **dadurch gekennzeichnet, dass** die Elektrode während der voreinstellbaren Zeitdauer nach dem Zünden des Lichtbogens mit unterschiedlicher konstanter Energie als während des eigentlichen Schweißprozesses versorgt wird.

## Claims

1. A welding method using a non-consumable electrode, in which the electrode is supplied with energy from a power source after the ignition of an electric arc between the electrode and the workpieces to be joined, **characterised in that**, prior to the welding process proper, a start program is performed without introduction of an additional material, by which the electrode is supplied with pulsed energy in the form of current or voltage pulses over a presettable period of time, thus causing the liquid melt bath to oscillate, or vibrate, respectively, and that the welding process proper is carried out after termination of the start program.

2. A tack welding method using a non-consumable electrode and without introduction of an additional material, in which the electrode is supplied with energy from a power source after the ignition of an electric arc between the electrode and the workpieces to be joined, **characterised in that**, prior to the welding process proper, a start program is performed, by which the electrode is supplied with pulsed energy in the form of current or voltage pulses over a presettable period of time, thus causing the liquid melt bath to oscillate, or vibrate, respectively, and that the welding process proper is carried out after termination of the start program by supplying the electrode with constant energy.

3. A method according to claim 1, **characterised in that** the electrode is supplied with constant energy during the welding process proper.

4. A method according to claim 2 or 3, **characterised in that** the introduction of energy during the start program is controlled in a manner that the mean value of the pulsed energy corresponds with the amplitude of the set welding current for the subsequent, constant-energy welding process proper.

5. A method according to any one of claims 1 to 4, **characterised in that** the parameters of the start program, in particular, the pulse parameters, such as pulse height, pulse width, pulse frequency, pulse break and, possibly, curve shape are freely settable at the power source.

6. A method according to any one of claims 1 to 5, **characterised in that** the parameters of the start program by a control and/or evaluation device provided in the welding apparatus or in the power source are automatically fixed or varied as a function of the parameters of the welding process proper.

7. A method according to claim 6, **characterised in that** the parameters of the start program are automatically fixed or varied as a function of the amplitude of the welding current used for the welding process proper.

8. A method according to claim 6 or 7, **characterised in that** the parameters of the start program are automatically fixed or varied as a function of the material thickness and/or material of the workpieces to be welded or further parameters of the welding process proper.

9. A method according to any one of claims 6 to 8, **characterised in that** several start programs having different parameters or curve shapes are defined and stored, and that said defined and stored start programs are used and/or varied by the control and/or evaluation device to select the parameters for the start program.

10. A method according to any one of claims 1 to 9, **characterised in that** the start program is carried out for a presettable period of time after the ignition of the electric arc.

11. A method according to claim 10, **characterised in that** during said presettable period of time after the ignition of the electric arc the electrode is supplied with constant energy.

12. A method according to claim 11, **characterised in that** the electrode, during the presettable period of time after the ignition of the electric arc, is supplied with constant energy different from that supplied during the welding process proper.

## Revendications

1. Procédé de soudage avec une électrode non fusible, dans lequel, après l'amorçage d'un arc électrique entre l'électrode et les pièces à raccorder, l'électrode est alimentée en énergie par une source de courant, **caractérisé en ce qu'**avant le procédé de soudage proprement dit, on effectue un programme de démarrage sans incorporation d'un matériau d'appoint, dans lequel l'électrode est alimentée, sur une période pré-réglable, en énergie pulsée sous la forme d'impulsions de courant ou de tension, ce qui permet de faire osciller ou vibrer le bain de fusion liquide, et **en ce qu'**une fois le programme de démarrage écoulé, on effectue le procédé de soudage proprement dit.

2. Procédé de soudage à épinglage avec une électrode non fusible et sans incorporation d'un matériau d'appoint, dans lequel, après l'amorçage d'un arc électrique entre l'électrode et les pièces à raccorder, l'électrode est alimentée en énergie par une source de courant, **caractérisé en ce qu'**avant le procédé de soudage proprement dit, on effectue un programme de démarrage, dans lequel l'électrode est alimentée, sur une période pré-réglable, en énergie pulsée sous forme d'impulsions de courant ou de tension, ce qui permet de faire osciller ou vibrer le bain de fusion liquide, et **en ce qu'**une fois le programme de démarrage écoulé, on effectue le procédé de soudage proprement dit, dans lequel l'électrode est alimentée par une énergie constante.

3. Procédé selon la revendication 1, **caractérisé en ce que**, dans le procédé de soudage proprement dit, l'électrode est alimentée en énergie constante.

4. Procédé selon la revendication 2 ou 3,
**caractérisé en ce que** l'apport d'énergie pendant le programme de démarrage est réglé de manière que la valeur moyenne de l'énergie pulsée corresponde à l'amplitude du courant de soudage réglé pour le procédé de soudage proprement dit suivant sous énergie constante.

5. Procédé selon l'une quelconque des revendications 1 à 4, **caractérisé en ce que** l'on peut régler librement les paramètres du programme de démarrage sur la source de courant, en particulier les paramètres des impulsions comme la hauteur des impulsions, la largeur des impulsions, la fréquence des impulsions, la pause des impulsions et éventuellement l'allure de la courbe.

6. Procédé selon l'une quelconque des revendications 1 à 5, **caractérisé en ce que** les paramètres du programme de démarrage sont définis ou modifiés automatiquement en fonction des paramètres du procédé de soudage proprement dit par un dispositif de commande et/ou d'exploitation dans l'appareil de soudage ou dans la source de courant.

7. Procédé selon la revendication 6, **caractérisé en ce que** les paramètres du programme de démarrage sont définis ou modifiés automatiquement en fonction de l'amplitude du courant de soudage pour le procédé de soudage proprement dit.

8. Procédé selon la revendication 6 ou 7, **caractérisé en ce que** les paramètres du programme de démarrage sont définis ou modifiés automatiquement en fonction de l'épaisseur du matériau ou du matériau des pièces à souder ou d'autres paramètres du procédé de soudage proprement dit.

9. Procédé selon l'une quelconque des revendications 6 à 8, **caractérisé en ce que** plusieurs programmes de démarrage avec différents paramètres ou allures de courbes sont définis et enregistrés et **en ce que**, pour choisir les paramètres pour le programme de démarrage, ces programmes de démarrage définis et enregistrés sont utilisés et/ou modifiés par le dispositif de commande et/ou d'exploitation.

10. Procédé selon l'une quelconque des revendications 1 à 9, **caractérisé en ce que** le programme de démarrage s'effectue une période de temps pré-réglable après l'amorçage de l'arc électrique.

11. Procédé selon la revendication 10, **caractérisé en ce que**, pendant la période de temps pré-réglable, après l'amorçage de l'arc électrique, l'électrode est alimentée en énergie constante.

12. Procédé selon la revendication 11, **caractérisé en ce que** l'électrode est alimentée pendant la période pré-réglable, après l'amorçage de l'arc électrique, en énergie constante différente de celle utilisée au cours du procédé de soudage proprement dit.
